(19) Europäisches Patentamt
European Patent Office
Office européen des brevets

(11) EP 3 816 208 A1

(12) EUROPEAN PATENT APPLICATION
published in accordance with Art. 153(4) EPC

(43) Date of publication:
05.05.2021 Bulletin 2021/18

(51) Int Cl.:
C08J 3/12 (2006.01)    C08J 5/00 (2006.01)

(21) Application number: 19843505.9

(86) International application number:
PCT/JP2019/029427

(22) Date of filing: 26.07.2019

(87) International publication number:
WO 2020/026981 (06.02.2020 Gazette 2020/06)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 03.08.2018 JP 2018146909

(71) Applicant: Taiyo Nippon Sanso Corporation
Tokyo 142-8558 (JP)

(72) Inventors:
• KODA Yasuhito
  Tokyo 142-8558 (JP)
• TAKADA Katsunori
  Tokyo 142-8558 (JP)
• IGARASHI Hiroshi
  Tokyo 142-8558 (JP)

(74) Representative: HGF
1 City Walk
Leeds LS11 9DX (GB)

(54) **PRODUCTION METHOD FOR POWDER, PRODUCTION METHOD FOR MELT-MOLDED ARTICLE, POWDER, COMPRESSION-MOLDED ARTICLE, AND MELT-MOLDED ARTICLE**

(57)    One object of the present invention is to provide a production method for powder that can produce powder which can suppress foaming of a melt and can produce a molded-article with good conductivity and appearance by melt-molding, the present invention provides a production method for powder containing a composite resin (2, 21, 22, 23) containing a thermomeltable resin (2a) and a conductive filler (2b), wherein the production method comprises: a dispersion preparing step in which a raw material powder containing the thermomeltable resin (2a), the conductive filler (2b), a dispersion medium in which the raw material powder and the conductive filler (2b) are dispersed, and a dispersant (3) for dispersing the conductive filler (2b) in the dispersion medium are mixed to prepare the dispersion: an intermediate powder recovering step in which the dispersion medium is removed from the dispersion and recovering an intermediate powder containing the composite resin (2, 21, 22, 23) and the dispersant (3); and a dispersant removing step in which the dispersant (3) is removed from the intermediate powder.

FIG. 1

**Description**

TECHNICAL FIELD

The present invention relates to a production method for powder, a production method for a melt-molded article, powder, a compression-molded article, and a melt-molded article.

BACKGROUND ART

A technique for imparting conductivity to a resin material is known. As an example, a composite resin containing a conductive filler such as carbon nanotubes and a resin material such as a thermomeltable fluororesin is known (Patent Document 1).

Patent Document 1 discloses a production method for a composite resin by drying a composite resin dispersion containing resin material particles, a carbon nanomaterial, a ketone-based solvent, and a dispersant. In the method of Patent Document 1, since the carbon nanomaterial can be dispersed in the ketone-based solvent using the dispersant, the carbon nanomaterial is fixed in a dispersed state on the surface of the resin material particles, and the composite resin is uniformly conductive.

PRIOR ART DOCUMENTS

PATENT LITERATURE

Patent Document 1 Japanese Unexamined Patent Application, First Publication No. 2015-30821

SUMMARY OF INVENTION

PROBLEM TO BE SOLVED BY THE INVENTION

However, in the composite resin obtained by the method disclosed in Patent Document 1, the melt may foam during melt-molding. Therefore, pores, irregularities, and the like are formed on the surface of the molded article, and the appearance may be impaired.

On the other hand, in a composite resin containing a carbon nanomaterial and a resin material, it is important to maintain the conductivity imparted by the carbon nanomaterial in order to secure the conductivity of the melt-molded product of the composite resin.

One problem to be solved by the present invention is to provide a production method for powder that can produce powder which can suppress foaming of a melt and can produce a molded-article with good conductivity and appearance by melt-molding.

MEANS FOR SOLVING THE PROBLEM

In order to solve the problem, the present invention provides the following production method for powder, powder, a compression-molded article, and a melt-molded article.

[1] A production method for powder containing a composite resin containing a thermomeltable resin and a conductive filler,
wherein the production method comprises:
a dispersion (first dispersion) preparing step in which a raw material powder containing the thermomeltable resin, the conductive filler, a dispersion medium in which the raw material powder and the conductive filler are dispersed, and a dispersant for dispersing the conductive filler in the dispersion medium are mixed to prepare the dispersion (first dispersion):

an intermediate powder recovering step in which the dispersion medium is removed from the dispersion (first dispersion) and recovering an intermediate powder containing the composite resin and the dispersant; and
a dispersant removing step in which the dispersant is removed from the intermediate powder.

[2] The production method for powder according to [1],
wherein the intermediate powder is immersed in a solvent which dissolves the dispersant in the dispersant removing step.

[3] The production method for powder according to [2],
wherein a difference between a surface tension of the solvent and a surface tension of the intermediate powder is equal to or greater than a difference between a surface tension of the dispersion medium and a surface tension of the raw material powder.

[4] The production method for powder according to any one of [1] to [3],
wherein a supercritical fluid which dissolves the dispersant is supplied to the intermediate powder in the dispersant removing step.

[5] The production method for powder according to [4],
wherein the supercritical fluid is carbon dioxide having a temperature of 31.1°C or higher and a pressure of 72.8 atm or higher, and a supply amount of the supercritical fluid is 0.25 g/min or less with respect to 1 mg of the dispersant contained in the intermediate powder.

[6] The production method for powder according to any one of [1] to [5],
wherein the intermediate powder is heated in the dispersant removing step.

[7] The production method for powder according to [6],
wherein a pressure when the intermediate powder is heated is atmospheric pressure or less.

[8] A production method for a melt-molded article,
wherein the production method for a melt-molded article comprises:

preparing powder containing the composite resin by the production method according to any one of [1] to [7]; and melt-molding the powder containing the composite resin.

[9] Powder comprising: a composite resin containing a thermomeltable resin, and a conductive filler attached to and fixed to a part of the surface of the thermomeltable resin; and a dispersant coordinating on the surface of the composite resin, and an amount of the dispersant is 0.5% by mass or less with respect to 100% by mass of a total of the thermomeltable resin, the conductive filler, and the dispersant.

[10] A compression-molded article which is a compression-molded article of the powder according to [9].

[11] The compression-molded article according to [10],
wherein a volume resistivity is in a range of $10^{-1}$ to $10^5$ $\Omega\cdot$cm.

[12] A melt-molded article which is a melt-molded article of the powder according to [9].

[13] The melt-molded article according to [12],
wherein an amount of the conductive filler is in a range of 0.1 to 0.5% by mass, and the volume resistivity Y satisfies the following equation (1).

$$3 \times 10^4 \times \exp(-11.51 \times C) \leq Y \leq 3 \times 10^7 \times \exp(-11.51 \times C) \ ... \ (1)$$

EFFECTS OF THE INVENTION

According to the present invention, it is possible to produce powder capable of suppressing foaming of a melt and produce a molded article having good conductivity and appearance by melt-molding.

BRIEF DESCRIPTION OF DRAWINGS

FIG. 1 is a schematic diagram for explaining an embodiment according to the present invention.
FIG. 2 is a schematic diagram for explaining another embodiment according to the present invention.
FIG. 3 is a schematic diagram for explaining another embodiment according to the present invention.
FIG. 4 is a flow chart for explaining another embodiment according to the present invention.
FIG. 5 is a graph showing the results of thermogravimetric analysis of powders produced in Examples and Comparative Example.
FIG. 6 is a graph showing the relationship between an amount: C (% by mass) of carbon nanotube and the volume resistivity of a melt-molded article in Examples.

DETAILED DESCRIPTION OF THE PREFERRED EMBODIMENTS

The meanings of the following terms in the present description are as follows.

The "thermomeltable resin" means a resin which melts by heating and exhibits fluidity to the extent that melt-molding can be performed.

The "average particle size" of the thermomeltable resin is a value measured using a particle size distribution meter, and is a mode diameter in the frequency distribution.

The "average length" of the conductive filler is, for example, a value measured by observation using a scanning electron microscope.

The "~" indicating a numerical range means that the numerical values before and after that are included as the lower limit value and the upper limit value, respectively.

<Production method for powder>

Hereinafter, one embodiment of the production method for powder according to the present invention will be described in detail. In the production method for powder of the present embodiment (hereinafter, referred to as "the present production method"), powder containing a composite resin is produced. The composite resin contains a thermomeltable resin and a conductive filler. In the composite resin, the conductive filler is dispersed and fixed on at least a part of the surface of the thermomeltable resin.

First, in this production method, a first dispersion is prepared by mixing a raw material powder, a conductive filler, a dispersion medium, and a dispersant.

The raw material powder contains a thermomeltable resin. The raw material powder may contain components other than the thermomeltable resin as long as the effects of the present invention are not impaired.

The thermomeltable resin is not particularly limited as long as it is a resin that exhibits fluidity when heated. Specific examples of the thermomeltable resin include polyethylene resin, polypropylene resin, polystyrene resin, acrylic resin, polyurethane resin, polyamide resin, and polyether ether ketone resin. However, the thermomeltable resin is not limited to these examples. The thermomeltable resin may be a synthetic product or a commercially available product.

As the thermomeltable resin, a thermomeltable fluororesin is preferable because the molded article is excellent in chemical resistance, heat resistance and the like.

Specific examples of the thermomeltable fluororesin include polytetrafluoroethylene, polyvinyl fluoride, polychlorotrifluoroethylene, polyvinylidene fluoride, a polytetrafluoroethylene-perfluoroalkyl vinyl ether copolymer, a tetrafluoroethylene-hexafluoropropylene copolymer, and an ethylene-tetrafluoroethylene copolymer. However, the thermomeltable fluororesin is not limited to these examples.

Specific examples of a commercially available thermomeltable fluororesin include Fluon® PFA (manufactured by AGC Co., Ltd.) and NEOFLON PFA (manufactured by Daikin Industries, Ltd.). However, the commercially available thermomeltable fluororesins are not limited to these examples.

One type of fluororesin may be used alone, or two or more types may be used in combination.

The conductive filler is not particularly limited as long as it can be fixed by attaching to the surface of the thermomeltable resin.

Specific examples of the conductive filler include carbon nanotubes, carbon nanofibers, carbon nanohorns, carbon nanocoils, and graphenes. However, the conductive filler is not limited to these examples. One type of conductive filler may be used alone, or two or more types may be used in combination.

Among these, as the conductive filler, carbon nanotubes are preferable because the moldability of the powder is further excellent and the conductivity of the powder tends to be further excellent.

When the conductive filler is carbon nanotubes, the average length of the carbon nanotubes is not particularly limited. The average length of the carbon nanotubes can be, for example, in a range of 1 to 600 $\mu$m, and preferably in the range of 3 to 100 $\mu$m. When the average length of the carbon nanotubes is 3 $\mu$m or more, the conductivity of the molded article of the powder is further excellent. When the average length of the carbon nanotubes is 100 $\mu$m or less, the carbon nanotubes tend to attach uniformly to the thermomeltable resin.

The dispersion medium is a liquid medium in which the raw material powder and the conductive filler are dispersed. The dispersion medium is liquid at room temperature.

As the dispersion medium, a liquid medium having a high affinity to a solid such as a thermomeltable resin is preferable. When a liquid medium having a high affinity to a thermomeltable resin is used as the dispersion medium, the surface of the raw material powder can be easily wetted with the dispersion medium.

Specific examples of the dispersion medium include an ethanol-based medium such as methanol, ethanol, isopropyl alcohol, n-butyl alcohol, ethylene glycol, and propylene glycol; a ketone-based medium such as acetone, ethyl methyl ketone, diethyl ketone, methyl propyl ketone, and cyclohexanone; an ether-based medium such as diethyl ether, dimethyl ether, and ethyl methyl ether; an aliphatic compound-based medium such as dichloromethane, chloroform, dimethylformamide, n-hexane, acetic acid, ethyl acetate, and cyclohexane; and an aromatic compound-based medium such as benzene, and toluene. One type of dispersion medium may be used alone, or two or more types may be used in combination.

Among these, as the dispersion medium, a ketone-based medium such as acetone, ethyl methyl ketone, diethyl ketone, methyl propyl ketone, and cyclohexanone is preferable. In addition, among the ketone-based media, ethyl methyl ketone is particularly preferable.

The dispersant is a compound which disperses the conductive filler in the dispersion medium. The dispersant can be selected according to the type of the raw material powder, the conductive filler, and the dispersion medium.

Specific examples of the dispersant include polymers such as acrylic polymers having a structural unit derived from acrylic monomers, polyallylamine, polystyrene imine, and cellulose derivatives. However, the dispersant is not limited to these examples.

When preparing the first dispersion, the thermomeltable resin and the conductive filler are dispersed in the dispersion medium.

When preparing the first dispersion, it is preferable to disperse the conductive filler in the dispersion medium in advance and use a second dispersion in which the conductive filler is dispersed in the dispersion medium.

When the second dispersion is used, the amount of the conductive filler is preferably 0.01 to 2% by mass, and more preferably 0.01 to 0.5% by mass with respect to 100% by mass of the second dispersion. When the amount of the conductive filler is 0.01% by mass or more, the molded article of the powder has further excellent conductivity. When the amount of the conductive filler is 2% by mass or less, the powder has further excellent moldability, and the molded article of the powder has further excellent mechanical properties.

As a method for dispersing the thermomeltable resin and the conductive filler in the dispersion medium, a method capable of suppressing the shearing force applied to the particles of the thermomeltable resin is preferable. As a specific example, stirring using a stirrer is preferable.

When dispersing the thermomeltable resin and the conductive filler in the dispersion medium, the temperature of the dispersion medium is preferably room temperature.

By dispersing the thermomeltable resin and the conductive filler in the dispersion medium, the conductive filler attaches to the surface of the thermomeltable resin, and a composite resin is formed in the dispersion medium. As a result, the first dispersion containing the composite resin, the dispersion medium, and the dispersant can be obtained in this production method.

The amount of the thermomeltable resin in the first dispersion is preferably 94.5 to 99.97% by mass with respect to 100% by mass of the total of the thermomeltable resin, the conductive filler, and the dispersant.

The amount of the conductive filler in the first dispersion is preferably 0.01 to 0.5% by mass with respect to 100% by mass of the total of the thermomeltable resin, the conductive filler, and the dispersant.

The amount of the dispersant in the first dispersion is preferably 0.02 to 5% by mass with respect to 100% by mass of the total of the thermomeltable resin, the conductive filler, and the dispersant.

The amount of the dispersion medium in the first dispersion is preferably 200 to 1000% by mass with respect to 100% by mass of the total of the thermomeltable resin, the conductive filler, and the dispersant.

When the amount of each component in the first dispersion is within the numerical range above, the powder has further excellent moldability, and the appearance and conductivity of the molded article of the powder are further improved.

In the semiconductor field, it is strongly required to reduce dust generation and outgassing of fillers. In the production method according to the present embodiment, when the amount of the conductive filler is 0.5% by mass or less with respect to 100% by mass of the total of the thermomeltable resin, the conductive filler, and the dispersant, there is a risk of contamination due to the conductive filler being reduced in the production process.

When preparing the first dispersion, the thermomeltable resin, the conductive filler, and the dispersant may be mixed in the presence of the dispersion medium.

The average particle size of the thermomeltable resin is preferably 5 to 100 μm. When the average particle size of the thermomeltable resin is 5 μm or more, the conductivity of the molded article of the powder is further improved. When the average particle size of the thermomeltable resin is 100 μm or less, the uniformity of the appearance of the molded article of the powder is further improved.

Next, in the production method according to the present embodiment, the dispersion medium is removed from the first dispersion, and the intermediate powder containing the composite resin and the dispersant is recovered. By removing the dispersion medium from the first dispersion, the surface of the thermomeltable resin is dried and the conductive filler is immobilized on the surface of the thermomeltable resin.

The method for removing the dispersion medium from the first dispersion is not particularly limited. For example, a solid content and a liquid may be separated by performing solid-liquid separation. When solid-liquid separation is performed, it is preferable that the solid content after solid-liquid separation be allowed to stand at room temperature and atmospheric pressure to dry naturally.

The dispersant is then removed from the intermediate powder in the production method according to the present embodiment. Examples of the method for removing the dispersant include the following removal methods (1) to (3).

Removal method (1): A method of immersing the intermediate powder in a solvent that dissolves the dispersant.
Removal method (2): A method of supplying a supercritical fluid that dissolves the dispersant to the intermediate powder.
Removal method (3): A method of heating the intermediate powder.

The removal methods (1) to (3) may be used individually or in combination of each.

The removal method (1) will be described.

When the removal method (1) is used when removing the dispersant from the intermediate powder, the intermediate powder may be immersed in a solvent stored in the container. At this time, the intermediate powder may be stirred in the solvent. As a result, the dispersion medium can be eluted in the solvent. Then, the powder is produced by removing the solvent.

The solvent is a liquid compound capable of dissolving the dispersant. However, as the solvent, a compound other than the dispersion medium is preferable from the viewpoint of maintaining the conductivity of the composite resin.

When the removal method (1) is used, it is preferable that the solvent be selected so that the difference between the surface tension of the solvent and the surface tension of the intermediate powder is equal to or greater than the difference between the surface tension of the dispersion medium and the surface tension of the raw material powder. As a result, the affinity between the solvent and the intermediate powder becomes relatively lower than the affinity between the dispersion medium and the raw material powder. Therefore, it becomes easy to prevent the intermediate powder from getting wet again due to immersion in the solvent, and it becomes difficult for the conductive filler to be separated from the surface of the thermomeltable resin.

The surface tension of polytetrafluoroethylene is 18 mN / m, and the surface tension of ethyl methyl ketone is 24.5 mN / m. When polytetrafluoroethylene is used as the thermomeltable resin powder and ethyl methyl ketone is used as the dispersion medium, the difference in surface tension between the dispersion medium and the thermomeltable resin is 6.5 mN / m. Therefore, as the solvent used for removing the dispersant, it is preferable to select a solvent such that the difference from the surface tension of the intermediate powder is larger than 6.5 mN/m, for example, toluene (surface tension: 29 mN m).

The surface tension can be measured by, for example, a surface tension meter ("High-performance surface tension meter DY-500" manufactured by Kyowa Interface Science Co., Ltd.).

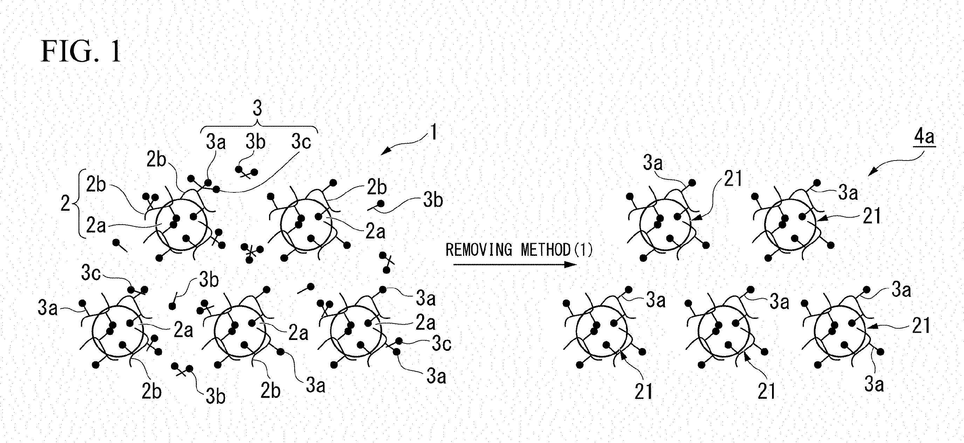

FIG. 1 is a schematic diagram for explaining the removal method (1). As shown in FIG. 1, the intermediate powder 1 contains the composite resin 2 and the dispersant 3. The composite resin 2 has a thermomeltable resin 2a and conductive fillers 2b. In the intermediate powder 1, the dispersant 3 contains attach dispersant 3a that is attached to the conductive filler 2b, a first free dispersant 3b existing between the composite resins 2, and a second free dispersant 3c that exists near the surface of the composite resin 2 by attaching to the attach dispersant 3a.

As shown in FIG. 1, when the removing method (1) is used to remove the intermediate powder 1, powder 4a containing the composite resin 21 is obtained. When the removal method (1) is used in this way, among the attach dispersant 3a, the first free dispersant 3b, and the second free dispersant 3c, the first free dispersant 3b and the second free dispersant 3c can be effectively removed. Therefore, in the powder 4a containing the composite resin 21, the amounts of the first free dispersant 3b and the second free dispersant 3c are relatively small.

When the removal method (1) is used, the entire amount of the intermediate powder may be immersed in the solvent at once, or the intermediate powder may be divided into a plurality of parts and each of them immersed in the solvent. However, from the viewpoint of suppressing the detachment and aggregation of the conductive filler, it is preferable to divide the intermediate powder into a plurality of parts and immerse each of them in the solvent in sequence.

The removal method (2) will be described.

When the removal method (2) is used to remove the dispersant from the intermediate powder, a supercritical fluid may be supplied to the intermediate powder stored in the container. As a result, the intermediate powder can be impregnated with the supercritical fluid. After that, the powder is produced by removing the supercritical fluid.

A preferable specific example of the supercritical fluid is a supercritical fluid of carbon dioxide.

The supercritical fluid of carbon dioxide can be generated under the conditions of a temperature: 31.1°C or higher and a pressure: 72.8 atm or higher.

The amount of carbon dioxide supplied as the supercritical fluid is preferably 0.25 g/min or less, preferably 0.20 g/min or less, and more preferably 0.15 g/min or less with respect to 1 mg of the dispersant contained in the intermediate powder, because it is easy to reduce the aggregation of the conductive filler. The lower limit of the supply amount of the supercritical fluid of carbon dioxide is not particularly limited, but can be, for example, 0.05 g/min or more. When the supply amount of the supercritical fluid of carbon dioxide is 0.25 g/min or less, it becomes easier to further reduce the aggregation of the conductive filler.

The conditions relating to the temperature, pressure, and supply amount of the carbon dioxide supercritical fluid may be applied to the removal method (2) alone or in combination.

When the removal method (2) is used, in a preferred embodiment of the present production method, the supercritical fluid is carbon dioxide having a temperature of 31.1°C or higher and a pressure of 72.8 atm or higher, and the supply amount of the supercritical fluid is 0.25 g/min or less with respect to 1 mg of the dispersant contained in the intermediate powder.

When the removal method (2) is used, in a more preferred embodiment of the present production method, the supercritical fluid is carbon dioxide having a temperature of 31.1 °C or higher and a pressure of 72.8 atm or higher, and the supply amount of the supercritical fluid is 0.20 g/min or less with respect to 1 mg of the dispersant contained in the intermediate powder.

When the removal method (2) is used, in a further preferred embodiment of the present production method, the supercritical fluid is carbon dioxide having a temperature of 31.1 °C or higher and a pressure of 72.8 atm or higher, and the supply amount of the supercritical fluid is 0.15 g/min or less with respect to 1 mg of the dispersant contained in the intermediate powder.

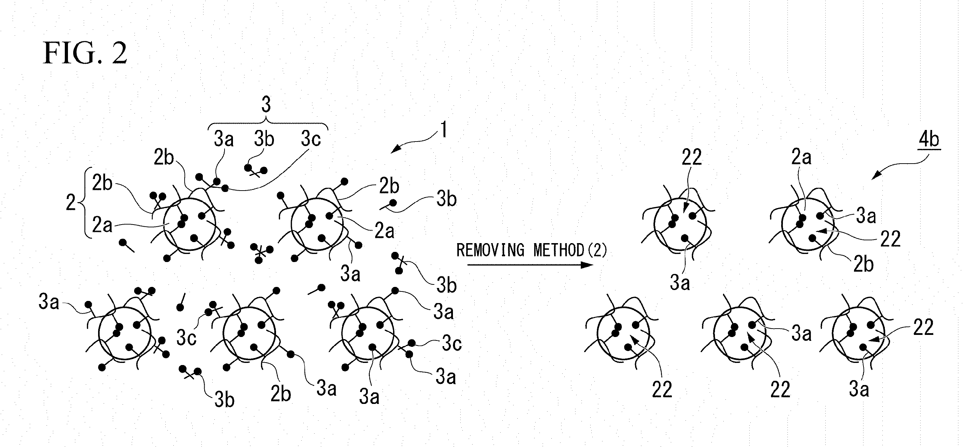

FIG. 2 is a schematic diagram for explaining the removal method (2). As shown in FIG. 2, the intermediate powder 1 contains the composite resin 2 and the dispersant 3.

As shown in FIG. 2, when the removing method (2) is used to remove the intermediate powder 1, powder 4b containing the composite resin 22 is obtained. As compared with the case of the removal method (1), in the removal method (2), the first free dispersant 3b can be removed more effectively, and a part of the attach dispersant 3a can also be removed (FIGS. 1 and 2). Therefore, in the powder 4b containing the composite resin 22, the amount of the attach dispersant 3a and the first free dispersant 3b are further relatively smaller than when the removal method (1) is used.

When the removal method (2) is used, the supercritical fluid may be supplied to the entire amount of the intermediate powder at once, or the intermediate powder may be divided into a plurality of parts and the supercritical fluid may be supplied to each of them. However, from the viewpoint of suppressing the detachment and aggregation of the conductive filler, it is preferable to divide the intermediate powder into a plurality of parts and supply the supercritical fluid to each of them.

The removal method (3) will be described.

When the removal method (3) is used to remove the dispersant from the intermediate powder, the intermediate powder may be heated to, for example, 200 to 250°C. The heating temperature of the intermediate powder is not particularly limited as long as it is a temperature equal to or higher than the decomposition temperature or the boiling point of the dispersant. Therefore, the heating temperature of the intermediate powder is appropriately set depending on the type of the dispersant. For example, when the dispersant is a copolymer of an acrylic monomer or a cellulose derivative, the heating temperature can be 200°C or higher. For example, when the dispersant is polyallylamine or polystyrene imine, the heating temperature can be 250°C or higher.

When heating the intermediate powder, the pressure at the time of heating is preferably 1 atm or less (that is, atmospheric pressure or less), more preferably 0.5 atm or less, further preferably 0.3 atm or less, and particularly preferably a vacuum state of 0.1 atm. When the pressure during the heating is 1 atm or less, the volatilization rate of the dispersant becomes even higher. Then, the volatilized dispersant is easily discharged from the processing container, and the desorbed dispersant is less likely to attach to the powder again.

When the intermediate powder is heated, the heat treatment time is not particularly limited. The heat treatment time can be, for example, 24 hours.

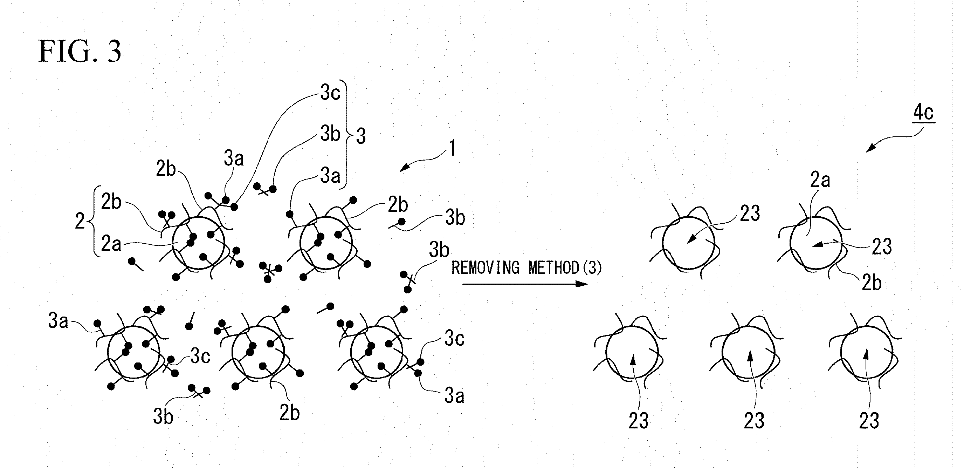

FIG. 3 is a schematic diagram for explaining the removal method (3). As shown in FIG. 3, the intermediate powder 1 contains the composite resin 2 and the dispersant 3.

As shown in FIG. 3, when the removal method (3) is used to remove the intermediate powder 1, powder 4c containing the composite resin 23 is obtained. When the removal method (3) is used in this way, all of the attach dispersant 3a, the first free dispersant 3b, and the second free dispersant 3c can be effectively removed. Therefore, in the powder 4c containing the composite resin 23, the amount of the attach dispersant 3a, the first free dispersant 3b, and the second free dispersant 3c is further relatively lower than the case where the removal method (1) or the removal method (2) is used.

When the removal method (3) is used, the entire amount of the intermediate powder may be heated at once, or the intermediate powder may be divided into a plurality of parts and heated. However, in the removing method (3), the thermodynamic degree of freedom of the conductive filler is relatively lower than when the removing method (1) or the removing method (2) is used. Therefore, the conductive filler is less likely to be detached, and the conductive filler is less likely to aggregate. Therefore, in the removal method (3), it is preferable to heat the intermediate powder at once from the viewpoint of production efficiency.

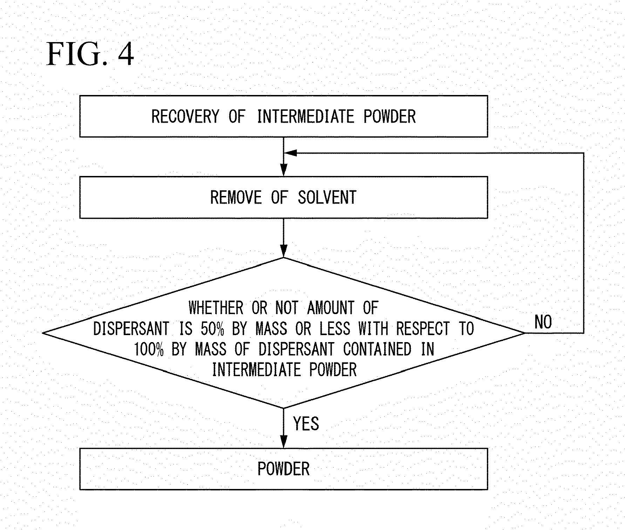

FIG. 4 is a flow chart showing a preferred embodiment of the present production method after recovering the intermediate powder. As shown in FIG. 4, the intermediate powder is recovered and the dispersant is removed. When removing the dispersant, any one of the removal methods (1) to (3) may be used alone, or each may be used in combination.

Next, it is determined whether or not the amount of the dispersant in the powder after removing the dispersant is 50% by mass or less with respect to the total 100% by mass of the dispersants contained in the intermediate powder. When the amount of the dispersant is 50% by mass or less with respect to 100% by mass of the total amount of the dispersants contained in the intermediate powder, the production of the powder is completed.

When the amount of the dispersant is more than 50% by mass with respect to the total 100% by mass of the dispersants contained in the intermediate powder, the removal of the dispersant is repeated again. When removing the dispersant from the second time onward, any of the removal methods (1) to (3) may be used alone, or each may be used in combination.

(Effects)

According to the production method of the present embodiment described above, since the dispersant is removed from the intermediate powder, the melt of the composite resin is less likely to foam during melt-molding, and the conductivity and surface appearance of the molded article are improved. In addition, since the dispersant is removed from the powder, a thread-like molded article can be easily produced by melt-molding.

<Production method for melt-molded article>

Hereinafter, the production method for a melt-molded article according to the present embodiment will be described.

In the production method for a melt-molded article according to the present embodiment, first, powder containing the composite resin is produced by the production method above. Next, the powder containing the composite resin is melt-molded. A melt-molding machine may be used for melt-molding.

The production method for a melt-molded article according to the present embodiment can be suitably used in the production of a thread-like melt-molded article such as a conductive tube. Then, the obtained thread-like melt-molded article can be suitably used in the production of conductive pellets. For example, conductive pellets can be produced by dividing the thread-like melt-molded article into a plurality of pieces.

(Effects)

According to the production method for a melt-molded article described above, since the powder containing the composite resin is produced by the production method described above and the powder is melt-molded, the melt of the composite resin is less likely to foam during the melt-molding. In addition, a melt-molded article with a good surface appearance can be obtained. Then, a thread-like melt-molded article can be easily produced.

<Powder>

Hereinafter, the powder according to the present embodiment (hereinafter, referred to as "the present powder") will be described.

The present powder contains a composite resin and a dispersant. The present powder may contain arbitrary components other than the composite resin and the dispersant as long as the effects of the present invention are not impaired.

The composite resin contains a thermomeltable resin and a conductive filler. The conductive filler attaches to and is fixed to a part of the surface of the thermomeltable resin. In the present powder, the dispersant may be present between the composite resins.

The dispersant is a compound that coordinates on the surface of the composite resin. The dispersant is not particularly limited as long as it is a compound capable of coordinating on the surface of the conductive filler by chemically interacting with the conductive filler. As specific examples of the dispersant, the same ones as described in the "<Production method for powder>" above can be exemplified.

The amount of the dispersant is 0.5% by mass or less, preferably 0.3% by mass or less, and more preferably 0.1% by mass or less, with respect to 100% by mass of the total of the thermomeltable resin, the conductive filler, and the dispersant.

The present powder can be produced according to "<Production method for powder>" above in the present description.

(Effects)

In the present powder described above, since the amount of the dispersant is 0.5% by mass or less, the melt of the composite resin is less likely to foam during melt-molding, and the appearance of the surface of the molded article is improved. Then, since the amount of the dispersant is 0.5% by mass or less, the conductivity is improved.

<Compression-molded article>

Hereinafter, the compression-molded article of the present embodiment (hereinafter, referred to as "the present compression-molded article") will be described.

The present compression-molded article is a compression-molded article of the powder described above.

The volume resistivity of the present compression-molded article is preferably $10^{-1}$ to $10^5$ $\Omega \cdot cm$, and more preferably $10^1$ to $10^2$ $\Omega \cdot cm$. The volume resistivity of the present compression-molded article can be measured, for example, with a resistivity meter ("Loresta GPMCP-T160" manufactured by Mitsubishi Chemical Analytech Co., Ltd.).

The surface resistivity of the powder in the present compression-molded article is estimated to be about $10^8$ to $10^{14}$ $\Omega/\square$. The surface resistivity of the powder in the present compression-molded article is measured by a surface resistivity measuring instrument ("Model: H0709" manufactured by Shishido Electrostatic, Ltd.).

The production method for the present compression-molded article is not particularly limited. For example, it can be produced by compression-molding the powder above. A compression-molding machine may be used for compression-molding.

The pressure during compression-molding can be, for example, 10 to 60 MPa.

The temperature during compression-molding can be, for example, 10 to 40°C.

(Effects)

The present compression-molded article explained above is a compression-molded product of the powder above, so the conductivity is improved.

<Melted-molded article>

Hereinafter, the melt-molded article of the present embodiment (hereinafter, referred to as "the present melt-molded article") will be described.

The present melt-molded article is a melt-molded article of the powder above.

The volume resistivity of the present melt-molded article is preferably $10^4$ to $10^7$ $\Omega \cdot cm$. The volume resistivity of the present melt-molded article can be measured by, for example, a resistivity meter ("Loresta GP MCP-T160 type" manufactured by Mitsubishi Chemical Analytech Co., Ltd.).

The production method for the present melt-molded article is not particularly limited. For example, it can be produced by melt-molding the powder above.

The temperature at the time of melt-molding can be, for example, 320 to 400°C.

The extrusion speed of the melt during melt-molding can be, for example, 5 to 40 rpm.

(Effects)

The melt-molded article described above is a melt-molded article of the powder or the compression-molded article, so it has good conductivity and a good surface appearance.

Although some embodiments of the present invention have been described above, the present invention is not limited to such specific embodiments. Additions, omissions, replacements, or other modifications to the present invention are allowable within the scope of the gist of the present invention described in the claims.

<Example>

Hereinafter, the present invention will be specifically described with reference to Examples, but the present invention is not limited to the following description.

(Thermogravimetric analysis)

Using a thermogravimetric/differential thermal analyzer ("TG-DTA2000SATG-DTA" manufactured by Bruker AX), the powder was heated in the range of 20°C to 250°C, and the amount of volatile components and decomposition components generated was measured. The atmospheric gas used for the measurement was air.

(Evaluation 1)

Powder obtained in each of the Examples and Comparative Example below was used as a sample. When the sample was melt-molded under the condition of 320°C using a uniaxial extrusion molding machine, the presence or absence of foaming of the powder melt was visually observed. When there was no foaming of the melt, it was judged as "good". When there was foaming of the melt, it was judged as "inferior". Here, the extrusion molding machine is a device that creates a melt-molded article by internally heating and melting and extruding a resin at a die portion. In the single-screw extruder, the number of screws used when transferring the resin inside the device is one (single-screw).

(Evaluation 2)

Powder obtained in each of the Examples and Comparative Example below was used as a sample. Using the single-screw extrusion molding machine described above, the sample was melt-molded under the condition of 320°C. When a thread-like melt-molded article (strand) was produced using the sample by melt-molding, it was visually observed whether or not the strands came out from the die portion, and the feasibility of producing the thread-like melt-molded article was evaluated. When a strand came out, it was judged as "good". When a strand did not come out, it was judged as "inferior".

(Evaluation 3)

Powder obtained in each of the Examples and Comparative Example below was used as a sample. A strand having a diameter of 3 mm was produced by melt-molding under the condition of 320°C using the single-screw extrusion molding machine above. The appearance of the strands obtained in each Example and Comparative Example was visually observed. When the number of the surface unevenness was 1 or less within the range of the strand length of 1 m, it was judged as "good". When the surface had more than one unevenness within the range of the strand length of 1 m, it was judged as "inferior".

(Evaluation 4)

A pellet-shaped melt-molded article (150 mm × 75 mm) obtained by melt-molding the powder obtained in each of the Examples and Comparative Example below for 5 minutes under the conditions of 320°C and 12 MPa was used as a sample. At the time of melt-molding, a melt-molding machine ("single-acting compression-molding machine" manufactured by Shinto Metal Industry Co., Ltd.) was used. The volume resistivity of the sample was measured using a resistivity meter ("Loresta GP MCP-T160 type" manufactured by Mitsubishi Chemical Analytech Co., Ltd.). When the volume resistivity of the melt-molded article was $10^{10}$ Ω·cm or less, which is the detection limit value, it was judged as "good". When the volume resistivity of the melt-molded article exceeds the detection limit of $10^{10}$ Ω·cm, it was judged as "inferior".

(Evaluation 5)

Powder obtained in each of the Examples and Comparative Example below was used as a sample. First, 5 g of the sample was placed in a mold so as to have an even height. Then, the pressure was gradually applied by a compression-molding machine ("manual 5 ton table press" manufactured by Sansho Industry Co., Ltd.) and kept at a pressure of 40 MPa for 1 minute to prepare a compression-molded article. Using the compression-molded article (φ30 mm, thickness 3 mm) as a measurement sample, the volume resistivity of the compression-molded article was measured. The volume resistivity of the compression-molded article was measured by the four-terminal method using a resistivity meter (manufactured by Mitsubishi Chemical Analytech Co., Ltd., Loresta GP MCP-T610 type).

(Example 1)

"Neoflon PFA" manufactured by Daikin Industries, Ltd. was used as the raw material powder containing the thermomeltable resin. Carbon nanotubes ("long carbon nanotubes" manufactured by Taiyo Nippon Sanso Co., Ltd.) were used as the conductive filler. An acrylic polymer was used as the dispersant.

First, 10 g of the carbon nanotubes, 5 kg of ethyl methyl ketone, and 30 g of the dispersant were mixed to prepare a CNT dispersion (the amount of the carbon nanotubes: 0.2% by mass). Next, 10 kg of the raw material powder and 5 kg of the CNT dispersion were placed in a stirring container and stirred for 10 minutes using a stirring motor ("Three One Motor BLh600" manufactured by Shinto Kagaku Co., Ltd.) to prepare a composite resin slurry. Here, the amount of the thermomeltable resin in the composite resin slurry was 99.6% by mass with respect to 100% by mass of the total of the thermomeltable resin, the carbon nanotubes, and the dispersant. The amount of the carbon nanotubes in the composite resin slurry was 0.1% by mass with respect to 100% by mass of the total of the thermomeltable resin, the carbon nanotubes, and the dispersant. The amount of the dispersant in the composite resin slurry was 0.3% by mass with respect to 100% by mass of the total of the thermomeltable resin, the carbon nanotubes, and the dispersant.

Then, ethyl methyl ketone was removed from the composite resin slurry, and the intermediate powder was recovered.

Next, the intermediate powder and a solvent (toluene) were put in a stirring container, and the intermediate powder was immersed in the solvent. Then, the mixture was stirred under the conditions of 20°C for 1 hour using a stirring motor to elute the dispersant in the solvent to obtain a slurry state. Then, the slurry was dried again under the conditions of 80°C for 24 hours and the solvent was removed to obtain powder.

As described above, in Example 1, the dispersant was removed by using the removal method (1) in the embodiments above. Evaluations 1 to 5 were carried out on the obtained powder according to the description above. The results are shown in Table 1.

(Example 2)

Powder was produced in the same manner as in Example 1 except that the intermediate powder was heated instead of being immersed in the solvent. During heating, the intermediate powder was heated using a square vacuum dryer ("Square vacuum dryer ADP300" manufactured by Yamato Scientific Co., Ltd.) under a pressure: 0.1 kPa or less, and a temperature: 200°C, for 24 hours. Thereby, the dispersant contained in the intermediate powder was removed.

As described above, in Example 2, the dispersant was removed by using the removal method (3) in the embodiments above. Evaluations 1 to 5 were carried out on the obtained powder according to the description above. The results are shown in Table 1.

(Example 3)

Intermediate powder was produced in the same manner as in Example 1 except that the amount of the carbon nanotubes used was changed so that the amount of the carbon nanotubes in the composite resin slurry was 0.3% by mass. Then, the dispersant was removed by using the removal method (3) under the same conditions as in Example 2. Evaluations 1 to 5 were carried out on the obtained powder according to the description above. The results are shown in Table 2. Moreover, the results of Example 2 are redisplayed in Table 2 for reference.

(Example 4)

Intermediate powder was produced in the same manner as in Example 1 except that the amount of the carbon nanotubes used was changed so that the amount of the carbon nanotubes in the composite resin slurry was 0.5% by mass. Then, the dispersant was removed by using the removal method (3) under the same conditions as in Example 2. Evaluations 1 to 5 were carried out on the obtained powder according to the description above. The results are shown in Table 2.

(Comparative Example 1)

Powder of Comparative Example 1 was produced in the same manner as in Example 1 except that the intermediate powder was not immersed in the solvent and the dispersant was not removed.

Evaluations 1 to 5 were carried out on the obtained powder of Comparative Example 1 according to the description above. The results are shown in Table 1.

[Table 1]

|  | Example 1 | Example 2 | Comparative Example 1 |
|---|---|---|---|
| Removing method | (1) | (3) | - |
| Molded article (melt-molding) Volume resistivity [$\Omega \cdot$cm] | $10^4 \sim 10^7$ | $10^4 \sim 10^7$ | $>10^{10}$ |
| Evaluation 1 | Good | Good | Inferior |
| Evaluation 2 | Good | Good | Inferior |
| Evaluation 3 | Good | Good | Good |
| Evaluation 4 | Good | Good | Inferior |

(continued)

|  | Example 1 | Example 2 | Comparative Example 1 |
|---|---|---|---|
| Evaluation 5<br>Molded article (Compression-molding)<br>Volume resistivity [$\Omega\cdot$cm] | $10^1 \sim 10^2$ | $10^1 \sim 10^2$ | $10^2 \sim 10^3$ |

[Table 2]

|  | Example 2 | Example 3 | Example 4 |
|---|---|---|---|
| Amount of Carbon nanotube (% by mass) | 0.1 | 0.3 | 0.5 |
| Removing method | (3) | (3) | (3) |
| Molded article (melt-molding)<br>Volume resistivity [$\Omega\cdot$cm] | $10^4 \sim 10^7$ | $10^3 \sim 10^6$ | $10^1 \sim 10^4$ |
| Evaluation 1 | Good | Good | Good |
| Evaluation 2 | Good | Good | Good |
| Evaluation 3 | Good | Good | Good |
| Evaluation 4 | Good | Good | Good |
| Evaluation 5<br>Molded article (Compression-molding)<br>Volume resistivity [$\Omega\cdot$cm] | $10^1 \sim 10^2$ | $10^0 \sim 10^1$ | $10^{-1} \sim 10^0$ |

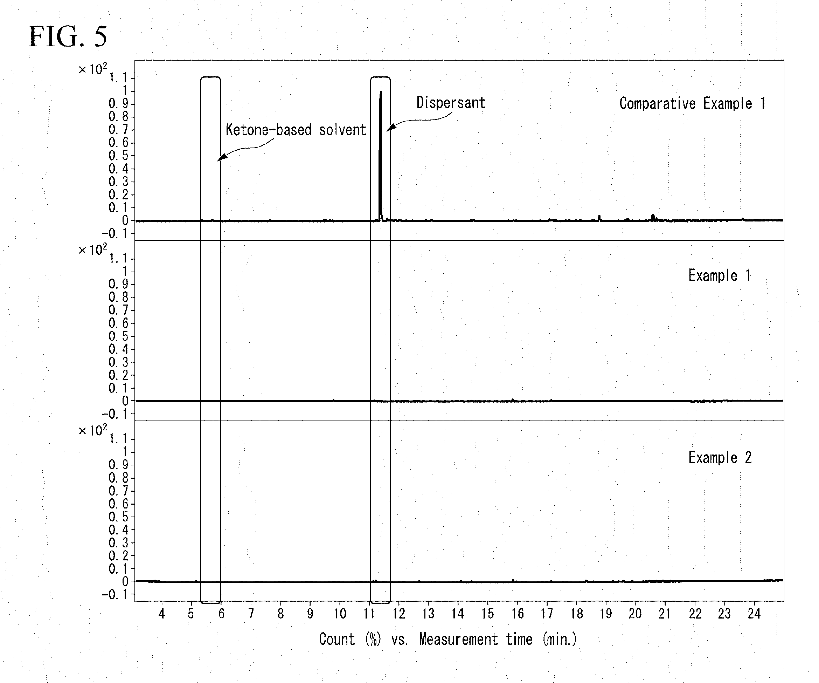

FIG. 5 is a graph showing the results of thermogravimetric analysis of the powders obtained in Examples and Comparative Example. As shown in FIG. 5, a peak of the ketone-based solvent (ethyl methyl ketone) was not observed in Examples 1 and 2 and Comparative Example 1. As shown in FIG. 5, no peak derived from the dispersant was observed in the powders of Examples 1 and 2, whereas a peak derived from the dispersant was observed in Comparative Example 1. From this result, it was confirmed that the dispersant could be removed from the intermediate powder in Examples 1 and 2. Furthermore, by comparing the peak sizes, it was determined that 95% or more of the dispersants contained in the intermediate powder could be removed in the powders of Examples 1 and 2. Therefore, it was estimated that the amount of the dispersant remaining in the powders of Examples 1 and 2 is 0.015% by mass (= 0.3% by mass $\times$ 0.05) or less with respect to 100% by mass of the powder. Therefore, it was expected that a molded article having a good appearance and conductivity could be produced without foaming due to a dispersant during melt-molding.

As shown in Table 1, in Examples 1 and 2 in which the dispersant was removed, foaming of the melt was not observed during melt-molding, and the surface of the strand was smooth. The volume resistivity of the melt-molded articles obtained in Examples 1 and 2 was about $10^6$ to $10^7$ $\Omega\cdot$cm, which had excellent conductivity.

The volume resistivity of the compression-molded article of the powder obtained in Examples 1 and 2 was 10 to $10^2$ $\Omega\cdot$cm. As described above, the conductivity of the powder before melting was sufficient. The surface resistivity of the powders obtained in Examples 1 and 2 was estimated to be about $10^8$ to $10^{14}$ $\Omega/\square$.

As shown in Tables 1 and 2, in Examples 2 to 4 using the removal method (3), foaming of the melt was not observed during melt-molding, and the surface of the strand was smooth. The volume resistivity of the melt-molded article obtained in Example 3 was about $10^3$ to $10^6$ $\Omega\cdot$cm, and the volume resistivity of the melt-molded article obtained in Example 4 was $10^1$ to $10^4$ $\Omega\cdot$cm. All melt-molded articles had excellent conductivity.

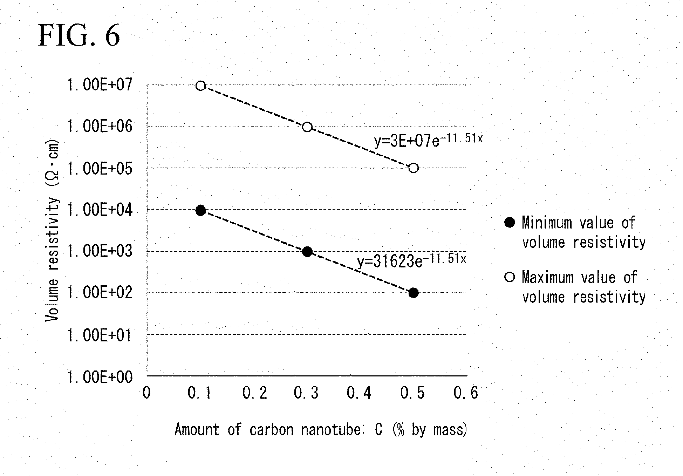

FIG. 6 is a graph showing the relationship between the carbon nanotube content: C (% by mass) and the volume resistivity of the melt-molded article. In FIG. 6, "E" represents an exponent. For example, "1.00E + 04" is "$1.00 \times 10^4$" and "1.00E + 07" is "$1.00 \times 10^7$". Then, "e" indicates the number of Napiers (2.71).

As shown in FIG. 6, the minimum value m of the volume resistivity of the melt-molded article can be calculated by the following formula (2) in the range of the carbon nanotube content: C of 0.1 to 0.5% by mass.

$$m = 3 \text{ x } 10^4 \text{ x } \exp\,(\text{-}11.51 \text{ x } C) \dots (2)$$

The maximum value M of the volume resistivity of the melt-molded article can be calculated by the following formula (3) in the range of carbon nanotube content: C of 0.1 to 0.5% by mass.

$$M = 3 \times 10^7 \times \exp(-11.51 \times C) \dots (3)$$

As described above, the volume resistivity Y of the melt-molded article is characterized by satisfying the following equation (1) in the range of carbon nanotube content: C of 0.1 to 0.5% by mass.

$$3 \times 10^4 \times \exp(-11.51 \times C) \leq Y \leq 3 \times 10^7 \times \exp(-11.51 \times C) \dots (1)$$

In Comparative Example 1 in which the dispersant was not removed, foaming of the melt was observed during melt-molding, and there were many pores on the surface of the strand, resulting in a poor surface condition. The volume resistivity of the melt-molded article exceeded the detection limit of $10^{10}$ Ω·cm, and the conductivity was not sufficient.
From the results of the Examples above, it was found that the powder obtained by removing the dispersant can suppress foaming of the melt during melt-molding, can stably produce strands, and the obtained strands have excellent conductivity.

Explanation of reference numeral

| | |
|---|---|
| 1 | intermediate powder |
| 2, 21, 22, 23 | composite resin |
| 2a | thermomeltable resin |
| 2b | conductive filler |
| 3 | dispersant |
| 3a | attach dispersant |
| 3b | first free dispersant |
| 3c | second free dispersant, |
| 4a, 4b, 4c | powder |

**Claims**

1. A production method for powder containing a composite resin containing a thermomeltable resin and a conductive filler,
   wherein the production method comprises:

   a dispersion (first dispersion) preparing step in which a raw material powder containing the thermomeltable resin, the conductive filler, a dispersion medium in which the raw material powder and the conductive filler are dispersed, and a dispersant for dispersing the conductive filler in the dispersion medium are mixed to prepare the dispersion (first dispersion);
   an intermediate powder recovering step in which the dispersion medium is removed from the dispersion (first dispersion) and recovering an intermediate powder containing the composite resin and the dispersant; and
   a dispersant removing step in which the dispersant is removed from the intermediate powder.

2. The production method for powder according to Claim 1,
   wherein the intermediate powder is immersed in a solvent which dissolves the dispersant in the dispersant removing step.

3. The production method for powder according to Claim 2,
   wherein a difference between a surface tension of the solvent and a surface tension of the intermediate powder is equal to or greater than a difference between a surface tension of the dispersion medium and a surface tension of the raw material powder.

4. The production method for powder according to any one of Claims 1 to 3,

wherein a supercritical fluid which dissolves the dispersant is supplied to the intermediate powder in the dispersant removing step.

5. The production method for powder according to Claim 4,
   wherein the supercritical fluid is carbon dioxide having a temperature of 31.1°C or higher and a pressure of 72.8 atm or higher, and a supply amount of the supercritical fluid is 0.25 g/min or less with respect to 1 mg of the dispersant contained in the intermediate powder.

6. The production method for powder according to any one of Claims 1 to 5,
   wherein the intermediate powder is heated in the dispersant removing step.

7. The production method for powder according to Claim 6,
   wherein a pressure when the intermediate powder is heated is atmospheric pressure or less.

8. A production method for a melt-molded article,
   wherein the production method for a melt-molded article comprises:

   preparing powder containing the composite resin by the production method according to any one of Claims 1 to 7; and
   melt-molding the powder containing the composite resin.

9. Powder comprising: a composite resin containing a thermomeltable resin, and a conductive filler attached to and fixed to a part of the surface of the thermomeltable resin; and a dispersant coordinating on the surface of the composite resin, and an amount of the dispersant is 0.5% by mass or less with respect to 100% by mass of a total of the thermomeltable resin, the conductive filler, and the dispersant.

10. A compression-molded article which is a compression-molded article of the powder according to Claim 9.

11. The compression-molded article according to Claim 10,
    wherein a volume resistivity is in a range of $10^{-1}$ to $10^5$ $\Omega$·cm.

12. A melt-molded article which is a melt-molded article of the powder according to Claim 9.

13. The melt-molded article according to Claim 12,
    wherein an amount of the conductive filler is in a range of 0.1 to 0.5% by mass, and the volume resistivity Y satisfies the following equation (1):

$$3 \times 10^4 \times \exp(-11.51 \times C) \leq Y \leq 3 \times 10^7 \times \exp(-11.51 \times C) \dots (1).$$

FIG. 1

FIG. 2

REMOVING METHOD (2)

# FIG. 3

REMOVING METHOD (3)

EP 3 816 208 A1

FIG. 4

```
┌─────────────────────────────────────────────────┐
│       RECOVERY  OF  INTERMEDIATE  POWDER          │
└─────────────────────────────────────────────────┘
                        │
                        ▼
┌─────────────────────────────────────────────────┐
│             REMOVE  OF  SOLVENT                   │
└─────────────────────────────────────────────────┘
                        │
                        ▼
         WHETHER OR NOT AMOUNT OF
  DISPERSANT IS 50% BY MASS OR LESS WITH RESPECT TO      NO
     100% BY MASS OF DISPERSANT CONTAINED IN
             INTERMEDIATE POWDER
                        │
                      YES
                        ▼
┌─────────────────────────────────────────────────┐
│                   POWDER                          │
└─────────────────────────────────────────────────┘
```

# FIG. 5

Count (%) vs. Measurement time (min.)

EP 3 816 208 A1

FIG. 6

### INTERNATIONAL SEARCH REPORT

International application No.

PCT/JP2019/029427

| A. CLASSIFICATION OF SUBJECT MATTER |
|---|

Int.Cl. C08J3/12(2006.01)i, C08J5/00(2006.01)i

According to International Patent Classification (IPC) or to both national classification and IPC

| B. FIELDS SEARCHED |
|---|

Minimum documentation searched (classification system followed by classification symbols)

Int.Cl. C08J3/12, C08J5/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | WO 2018/066706 A1 (TOHO KASEI CO., LTD., TAIYO NIPPON SANSO CORPORATION) 12 April 2018, claims 1, 2, 4, paragraphs [0040], [0044], [0046] [0054]-[0059], [0066], [0070], [0094] examples 3-6 & KR 10-2019-0066022 A & CN 109844015 A | 9-13<br>1-8 |
| A | JP 2015-214450 A (NIPPON ZEON CO., LTD., TOYOTA TSUSHO CORPORATION, TOYOTA TSUSHO MATEX CORPORATION) 03 December 2015, claim 1, paragraphs [0054], [0055] (Family: none) | 1-13 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October 2019 (07.10.2019) | 15 October 2019 (15.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

# EP 3 816 208 A1

**INTERNATIONAL SEARCH REPORT**

International application No.

PCT/JP2019/029427

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/132254 A1 (KURARAY CO., LTD.) 14 December 2006, claims 1, 8, paragraphs [0007], [0029] & US 2009/0032777 A1 claims 1, 8, paragraphs [0007], [0030] | 1-13 |

Form PCT/ISA/210 (continuation of second sheet) (January 2015)

**EP 3 816 208 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015030821 A